# EUROPEAN PATENT APPLICATION

(11) **EP 4 804 046 A1**
(43) Date of publication of application: **09.09.2026**
(21) Application number: 25835875.3
(22) Date of filing: 19.05.2025
(51) Int. Cl.: G06F 16/2453

(54) **ADAPTIVE MATERIALIZATION METHOD AND APPARATUS FOR DATABASE, AND ELECTRONIC DEVICE**

(30) Priority: 11.07.2024 CN 202410928973
(71) Applicant: Tencent Technology (Shenzhen) Company Limited, Shenzhen, Guangdong 518057 (CN)
(72) Inventor: ZHANG, Shujie, Shenzhen, Guangdong 518057 (CN)
(74) Representative: AWA Sweden AB
(86) International application number: PCT/CN2025/095777
(87) International publication number: WO 2026/011972

(57) **Abstract**

An adaptive materialization method for a database, wherein the method is executed by an electronic device. The method includes: determining a data connection execution plan for a database, wherein the data connection execution plan is used for performing data connection on a driving table and a driven table in the database, the data connection execution plan comprises execution sub-plans sequentially executed for each data record in the driving table, and the execution sub-plan executed each time corresponds to one data record in the driving table (101); selecting one data record from the driving table, executing, for the selected data record and on the driven table, an execution sub-plan for the data connection, and detecting execution information during the execution of the executing sub-plan (102); on the basis of the execution information, performing a materialization operation on the driven table, so as to obtain a materialized table (103); and performing data connection on the driving table and the materialized table, so as to replace the data connection execution plan (104).

## Description

### RELATED APPLICATION

This application claims priority to Chinese Patent Application No. 202410928973.5, filed on July 11, 2024, and entitled "ADAPTIVE MATERIALIZATION METHOD AND APPARATUS FOR DATABASE, AND ELECTRONIC DEVICE", which is incorporated herein by reference in its entirety.

### FIELD OF THE TECHNOLOGY

The present disclosure relates to database technologies, and particularly, to an adaptive database materialization method and apparatus, an electronic device, a computer-readable storage medium, and a computer program product.

### BACKGROUND OF THE DISCLOSURE

A database management system (DBMS) is a software system configured for creating, maintaining, managing, and using a database. A user may access and operate data stored in the database through the DBMS. An optimizer and an executor are key components of the DBMS. The optimizer is configured to generate an efficient execution plan according to a query instruction, and the executor is configured to execute the execution plan generated by the optimizer.

In a solution, a materialization operator is fixed in the execution plan by the optimizer. When the optimizer determines, after estimation, that performing materialization is not beneficial, no materialization operator is fixed in the execution plan. However, due to the impact of various factors (such as, statistical information, a cost model, and various assumptions), an estimation deviation problem encountered by the optimizer is inevitable. This may cause an execution plan that is expected to include a materialization operator to fail to include the materialization operator, to result in performance degradation.

### SUMMARY

The present disclosure provides an adaptive database materialization method and apparatus, an electronic device, a computer-readable storage medium, and a computer program product.

An adaptive database materialization method, executed by an electronic device, includes:
determining an execution plan which includes a set of operations for joining a driving table with a driven table in a database, the execution plan comprising a plurality of sequentially executable sub-plans for a plurality of data records in the driving table, each of the sub-plans being for one data record of the plurality of the data records in the driving table;
collecting statistical information associated with the execution plan about data records in at least one of the driving table and the driven table during a process of executing a sub-plan to join a data record of the plurality of the data records in the driving table with the driven table;
materializing the driven table based on the statistical information to obtain a materialized table; and
stopping executing the execution plan and joining the driving table with the materialized table.

An adaptive database materialization apparatus includes:
a determination module, configured to determine an execution plan which includes a set of operations for joining a driving table with a driven table in a database, the execution plan comprising a plurality of sequentially executable sub-plans for a plurality of data records in the driving table, each of the sub-plans being for one data record of the plurality of the data records in the driving table;
a first execution module, configured to collect statistical information associated with the execution plan about data records in at least one of the driving table and the driven table during a process of executing a sub-plan to join a data record of the plurality of the data records in the driving table with the driven table;
a materialization module, configured to materialize the driven table based on the statistical information to obtain a materialized table; and
a second execution module, configured to stop executing the execution plan and join the driving table with the materialized table.

The present disclosure provides an electronic device, including: a memory, configured to store executable instructions; and a processor, configured to execute the executable instructions stored in the memory, to implement the adaptive database materialization method provided by the present disclosure.

The present disclosure provides a non-transitory computer-readable storage medium, having executable instructions stored therein, the executable instructions, when executed by a processor, implementing the adaptive database materialization method provided by the present disclosure.

This application provides a computer program product. The computer program product includes executable instructions, the executable instructions being configured for, when executed by a processor, implementing the adaptive database materialization method provided by this application.

Details of one or more embodiments of the present disclosure are provided in the following accompanying drawings and descriptions below. Other features, objectives, and advantages of the present disclosure become apparent from the specification, the accompanying drawings, and the claims.

### BRIEF DESCRIPTION OF THE DRAWINGS

To describe technical solutions of embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without creative efforts.
FIG. 1 is a schematic architectural diagram of an adaptive database materialization system according to an embodiment of the present disclosure.
FIG. 2 is a schematic structural diagram of a server according to an embodiment of the present disclosure.
FIG. 3A is a first schematic flowchart of an adaptive database materialization method according to an embodiment of the present disclosure.
FIG. 3B is a second schematic flowchart of an adaptive database materialization method according to an embodiment of the present disclosure.
FIG. 3C is a third schematic flowchart of an adaptive database materialization method according to an embodiment of the present disclosure.
FIG. 3D is a fourth schematic flowchart of an adaptive database materialization method according to an embodiment of the present disclosure.
FIG. 4 is a first schematic flowchart of a data table according to an embodiment of the present disclosure.
FIG. 5 is a second schematic flowchart of a data table according to an embodiment of the present disclosure.
FIG. 6 is a third schematic flowchart of a data table according to an embodiment of the present disclosure.
FIG. 7 is a fourth schematic flowchart of a data table according to an embodiment of the present disclosure.
FIG. 8 is a fifth schematic flowchart of a data table according to an embodiment of the present disclosure.
FIG. 9 is a schematic diagram of determining, by an optimizer, an execution plan that does not have a fixed materialization operator according to an embodiment of the present disclosure.
FIG. 10 is a schematic diagram of adaptive materialization of an executor according to an embodiment of the present disclosure.
FIG. 11 is a schematic diagram of implementing a nested loop join in the absence of materialization according to an embodiment of the present disclosure.
FIG. 12 is a schematic diagram of implementing a nested loop join in the presence of materialization according to an embodiment of the present disclosure.

### DESCRIPTION OF EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In the following descriptions, related "some embodiments" describe a subset of all possible embodiments. However, the "some embodiments" may be the same subset or different subsets of all the possible embodiments, and may be combined with each other without conflict. In the following descriptions, a related term "a plurality of" means at least two.

The term "first/second/third" involved in the following descriptions is merely used to distinguish between similar objects and does not denote specific order of objects. Specific order or sequence of the term "first/second/third" can be interchanged where permitted such that the embodiments of the present disclosure described herein can be implemented in order other than that illustrated or described herein.

Unless otherwise defined, meanings of all technical and scientific terms used in this specification are the same as those usually understood by a person skilled in the art to which the present disclosure belongs. Terms used herein are merely intended to describe the embodiments of the present disclosure, but are not intended to limit the present disclosure.

In the embodiment of the present disclosure, the term "module" or "unit" refers to a computer program with a preset function or a part of the computer program and works, together with other related parts, to implement a preset target, and may be completely or partially implemented by using software, hardware (for example, a processing circuit or a memory) or a combination thereof. Similarly, one processor (or a plurality of processors or memories) may be configured to implement one or more modules or units. In addition, each module or unit may be a part of an overall module or unit including a function of the module or unit.

Before the embodiments of the present disclosure are further described in detail, a description is made on nouns and terms in the embodiments of the present disclosure, and the nouns and terms in the embodiments of the present disclosure are applicable to the following explanations.
1) Database: In brief, a database can be regarded as an electronic file cabinet, that is, a place in which electronic files are stored. Users can perform operations such as addition, query, update, and deletion on data in the files. The so-called "database" refers to a collection of data that is stored together in a particular manner, can be shared among a plurality of users, has minimal redundancy, and is independent of an application program.

Database management system (DBMS): It is a computer software system configured for managing databases, and generally has basic functions such as storage, interception, security assurance, and backup. The DBMS may be classified based on a database model supported by the DBMS, such as relational models and eXtensible Markup Language (XML), or may be classified based on supported computer types, such as a server cluster and a mobile phone, or may be classified based on a used query language, such as Structured Query Language (SQL) and Xquery, or may be classified based on performance emphasis, such as a maximum scale or a highest operating speed, or may be classified based on another classification manner. Regardless of the classification manner used, some DBMSs can span categories, for example, supporting a plurality of query languages simultaneously.

2) Materialization: Materialization refers to a process of loading all or a part of data records in a data table into a temporary file, and the temporary file may be referred to as a materialized table or a materialized view. For example, an executor in a DBMS may perform a materialization operation through a temporary tuple storage module.

Compared with an original data table, performing a data join based on the materialized table can achieve higher performance. However, the materialization operation incurs additional overhead. If the performance improvement provided by the materialized table is insufficient to compensate for the overhead introduced by the materialization operation, performing the materialization operation is not beneficial.
3) Optimizer: It is a key component in the DBMS, and is configured for receiving a data query instruction and generating an efficient execution plan. In the embodiments of the present disclosure, the optimizer needs to evaluate, based on actual conditions, whether to fix a materialization operator in the execution plan. The materialization operator is an operator configured to trigger the materialization operation.
4) Executor: It is a key component in the DBMS, and is configured for executing the execution plan generated by the optimizer, and specifically configured for reading data from the database, performing necessary computations and related operations, and finally returning a result.
5) Execution plan: It is an internal data access strategy generated by the optimizer, and describes how a database engine executes a query operation to obtain expected data. The execution plan includes but is not limited to the following content: (1) data reading sequence: an access sequence of a data table and an index; (2) operation type: a specific manner of an operation such as full table scan, index scan, sorting, or aggregation; (3) join manner: configured for describing how a data join operation is performed between different data tables in a multi-table query scenario; and (4) index usage: indexes that may be actually used to accelerate query, or whether a full table scan has to be performed for various reasons.

In a multi-table query scenario of the embodiments of the present disclosure, a data join execution plan (simply referred to as execution plan hereinafter) does not have a fixed materialization operator. The data join execution plan includes sub-plans sequentially executed for each data record in a driving table. A sub-plan executed each time corresponds to one data record in the driving table. In other words, a repeated execution count of the sub-plan equals a quantity of rows (i.e., a quantity of data records) in the driving table.

Sub-plan: It refers to a plan that is executed sequentially for each data record in the driving table within the data join execution plan. The sub-plan executed each time corresponds to one data record in the driving table and is configured to perform a data join between one data record in the driving table and all data records in a driven table.
6) Data join: It refers to an operation that combines rows (data records) in a plurality of data tables. Such data tables typically share common columns or fields. Data join manners include, but are not limited to, a nested loop join, a hash join, and a merge-sort join. The nested loop join includes a two-level loop structure, in which an outer loop traverses the driving table and an inner loop traverses the driven table, and corresponding fields in the two data tables are compared to identify matching data records. The hash join includes a build phase and a probe phase. During the build phase, a hash table is generated based on the driving table. During the probe phase, data records in the driven table are traversed and hash values are computed to match entries in the hash table. The merge-sort join is configured for efficiently performing join operations on a plurality of sorted or sortable data tables. For example, for the plurality of sorted data tables, values in join columns are sequentially compared to generate a final join result.
7) Driving table: Driving table, referred to as an outer table or outer-level table, refers to a data table that serves as an outer-level loop in a data join operation. The driving table is configured to drive a query process. All data records in the driving table (or a part of data records satisfying a specific data filtering condition) serve as loop base data, and then a matching data record is queried from the driven table based on each data record in the data records.
8) Driven table: Driven table, referred to as an inner table or inner-level table, refers to a data table that, as opposed to the driving table in a data join operation, serves as an inner-level loop or a data table to be matched and probed.
9) Data record: Data record, referred to as a data row, refers to a row of data in a data table, the row including values corresponding to all columns (fields) in the data table.

Embodiments of the present disclosure provide an adaptive database materialization method and apparatus, an electronic device, a computer-readable storage medium, and a computer program product, which can enable adaptive materialization in an execution process of a data join execution plan to improve performance of a database. The following describes exemplary applications of an electronic device provided in the embodiments of the present disclosure. The electronic device provided in the embodiments of the present disclosure may be a server. The term, involved in the following description, "some embodiments" describes subsets of all possible embodiments, but "some embodiments" may be the same subset or different subsets of all the possible embodiments and may be combined with each other without conflict.

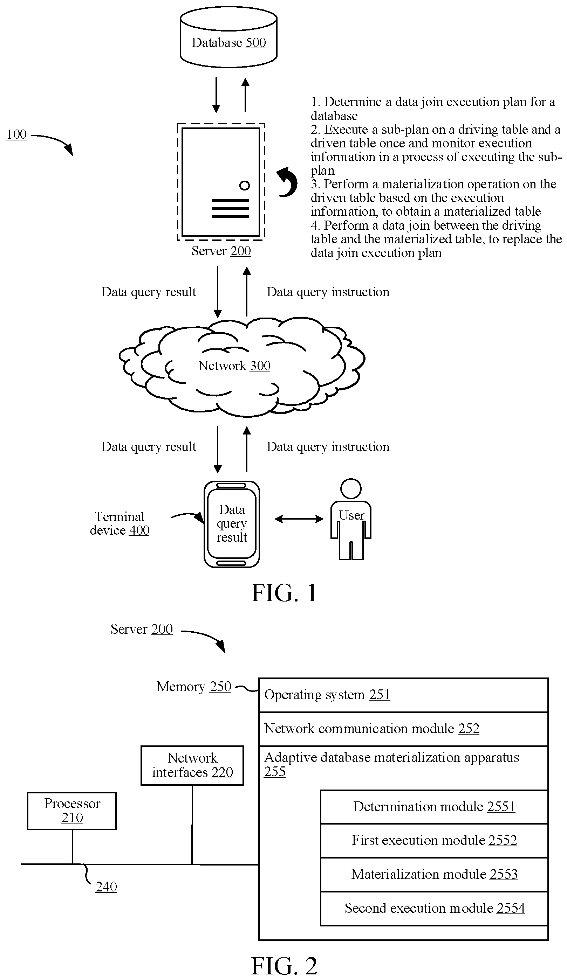

FIG. 1 is a schematic architectural diagram of an adaptive database materialization system 100 according to an embodiment of the present disclosure. A terminal device 400 is connected to a server 200 through a network 300, and the server 200 is connected to a database 500. The network 300 may be a wide area network, a local area network, or a combination thereof. The server 200 provides a hardware and software environment of the database 500, and is configured to process a request and a response for the database 500. The server 200 may control access permission of the database 500 and maintain security and integrity of data. The database 500 is configured to store and manage data, and functions of the database 500 are implemented through the server 200.

In some embodiments, the terminal device 400 transmits a data query instruction for the database 500 to the server 200. The server 200 determines a data join execution plan for the database 500 according to the received data query instruction. The data join execution plan is configured to perform a data join between a driving table and a driven table in the database 500, the data join execution plan includes sub-plans sequentially executed for each data record in the driving table, and a sub-plan executed each time corresponds to one data record in the driving table. The server 200 selects one data record from the driving table, executes, for the selected data record, a sub-plan configured for a data join on the driven table once, and collects execution information (also referred to as statistical information hereinafter) in a process of executing the sub-plan. The server 200 determines whether to materialize the driven table based on whether the statistical information satisfies a pre-defined condition. The server 200 may perform a materialization operation on the driven table based on the statistical information to obtain a materialized table, stop executing the data join execution plan and join the driving table with the materialized table. The server 200 transmits a data query result to the terminal device 400 as a response to the data query instruction. The data query result is obtained through the data join operation executed by the server 200. Operations executed by the server 200 in the above process can be implemented through a database management system in the server 200.

In some embodiments, the server 200 can implement an adaptive database materialization method provided in embodiments of the present disclosure by running a computer program, for example, the computer program may be a native program or a software module in an operating system; or may be a native application (APP), namely, a program that needs to be installed in the operating system to run; or may be a mini program, namely, a program that only needs to be downloaded into a browser environment to run; or may be the mini program that can be embedded into any APP, the mini program being controlled or terminated by a user. In summary, the foregoing computer program may be an application, a module, or a plugin in any form.

In some embodiments, the server 200 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform. The terminal device 400 may be a smartphone, a tablet computer, a laptop, a desktop computer, a smart speaker, a smartwatch, an in-vehicle terminal, or the like, but is not limited thereto. The terminal device 400 and the server 200 may be directly or indirectly connected in a manner of wired or wireless communication. This is not limited in this embodiment of the present disclosure.

FIG. 2 is a schematic structural diagram of a server 200 according to an embodiment of the present disclosure. The server 200 shown in FIG. 2 includes at least one processor 210, a memory 250, and at least one network interface 220. Components in the server 200 are coupled together through a bus system 240. The bus system 240 is configured to implement connection and communication between the components. In addition to a data bus, the bus system 240 further includes a power bus, a control bus, and a state signal bus. However, for clear description, all types of buses in FIG. 2 are marked as the bus system 240.

The processor 210 may be an integrated circuit chip with a signal processing capability, such as a general-purpose processor, a digital signal processor (DSP), or another programmable logic device, discrete gate, transistor logic device, or discrete hardware component. The general-purpose processor may be a microprocessor, any conventional processor, or the like.

The memory 250 may be a removable memory, a non-removable memory, or a combination thereof. The exemplary hardware device includes a solid memory, a hard disk drive, an optical disk drive, and the like. The memory 250 alternatively includes one or more storage devices away from the processor 210 in physical positions.

The memory 250 includes a volatile memory or a non-volatile memory, or may include both a volatile memory and a non-volatile memory. The non-volatile memory may be a read only memory (ROM), and the volatile memory may be a random access memory (RAM). The memory 250 described in this embodiment of the present disclosure is to include any other suitable type of memories.

In some embodiments, the memory 250 can store data to support various operations. Examples of the data include a program, a module, and a data structure or other subsets or supersets, which are described below by examples.

An operating system 251 includes a system program configured for processing various basic system services and executing a hardware-related task, such as a framework layer, a core library layer, and a driver layer, and is configured for implementing various basic services and processing a hardware-based task.

A network communication module 252 is configured to reach another computing device through one or more (wired or wireless) network interfaces 220. Exemplary network interfaces 220 include: Bluetooth, Wireless Fidelity (WiFi), a universal serial bus (USB), and the like.

In some embodiments, an adaptive database materialization apparatus provided in the embodiments of the present disclosure may be implemented by using software. FIG. 2 shows an adaptive database materialization apparatus 255 that is stored in the memory 250. The adaptive database materialization apparatus 255 may be software such as a program or a plugin, and includes the following software modules: a determination module 2551, a first execution module 2552, a materialization module 2553, and a second execution module 2554. These modules are logical modules, and may be combined in different manners or further divided according to functions to be implemented. Functions of each module will be described below.

An adaptive database materialization method provided in the embodiments of the present disclosure will be described with reference to exemplary applications and implementations of the electronic device provided in the embodiments of the present disclosure.

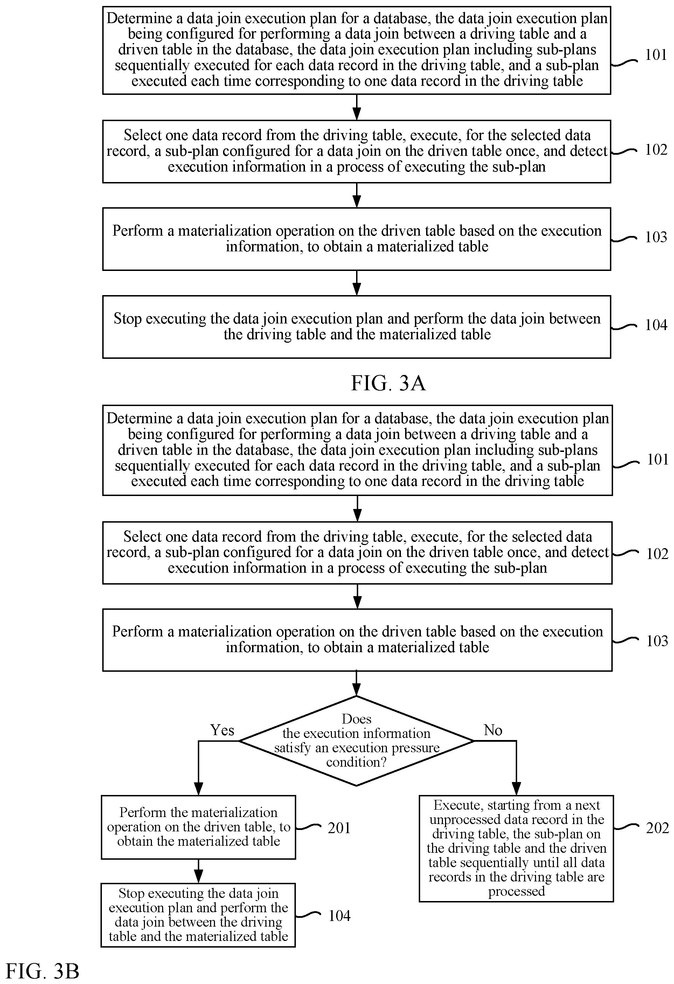

FIG. 3A is a schematic flowchart of an adaptive database materialization method according to an embodiment of the present disclosure. The adaptive database materialization method provided in this embodiment of the present disclosure may be implemented by an electronic device, for example, a server. Descriptions are provided with reference to operations shown in FIG. 3A.

Operation 101: Determine an execution plan which includes a set of operations for joining a driving table with a driven table in a database, the data join execution plan including sub-plans sequentially executed for each data record in the driving table, and a sub-plan executed each time corresponding to one data record in the driving table.

For example, when a data query instruction for the database is received, the data join execution plan for the database is determined according to the data query instruction so as to meet a data query requirement of the data query instruction.

In this embodiment of the present disclosure, the data query instruction is related to a plurality of data tables in the database. To be specific, these data tables include data to be queried by the data query instruction. Therefore, a data query scenario involved in this embodiment of the present disclosure may alternatively be referred to as a multi-table query scenario. For example, the data query instruction is configured for querying, for each student ID in a class, a score corresponding to each course, a student name corresponding to each student ID, and a student gender corresponding to each student ID. The database includes a score table and a student table. Fields in the score table include a student ID, a course ID, and a score, and fields in the student table include a student ID, a student name, and a student gender. In this case, both the score table and the student table are related to the data query instruction.

The foregoing data join execution plan is configured to perform the data join between the driving table and the driven table in the database. The data join execution plan includes the sub-plans sequentially executed for each data record in the driving table, the sub-plan executed each time corresponds to one data record in the driving table, and the sub-plan is configured to perform a data join between one data record in the driving table and all data records in the driven table. Both the driving table and the driven table are data tables related to the data query instruction. The division of the driving table and the driven table constitutes a part of the data join execution plan. The foregoing score table and student table are used as an example. The score table may be determined as the driving table and the student table may be determined as the driven table; alternatively, the student table may be determined as the driving table and the score table may be determined as the driven table. There may be one or more driven tables. This is not limited in the embodiments of the present disclosure. When the data join execution plan is determined, a quantity of data records in the driving table cannot be determined, and therefore, a repeated execution count of the sub-plan cannot be determined.

The essence of the data join is to perform matching processing on a data record in the driving table and a data record in the driven table, and to perform combination processing on two data records that are successfully matched to obtain a target data record. In an actual operation, the matching processing may be implemented in the following manner. It is assumed that the driving table and the driven table are stored in a relational database, when a query is performed using a structured query language (SQL) statement, whether target fields are equal can be determined using a JOIN operation combined with an ON clause. For example, for the score table (driving table) and the student table (driven table), a student ID is used as the target field, the SQL statement may be written as follows: SELECT*FROM score_table JOIN student_table ON score_ table.student_ID=student_table.student_ID. A database engine automatically performs matching based on the condition. In terms of combination processing, in SQL, fields that need to be combined may be specified through a SELECT clause, for example: SELECT score_table.student_ID, score_ table.score, student_table.student_name FROM score_table JOIN student_table ON score table.student_ID=student_table.student ID. Matching processing refers to determining whether the target fields of the data records in the driving table and the driven table (i.e., the common fields shared by the two tables) have the same values. If the values are the same, the matching is considered successful; and if the values are different, the matching is considered unsuccessful. Furthermore, the combination processing may be performed on all or a part of the fields in the two successfully matched data records and is performed according to requirements of a practical application scenario.

For example, the score table is used as the driving table, and the student table is used as the driven table. A data record in the driving table (for illustrative purposes, referred to as a data record 1) may be "Student ID-2, Course ID-1, Score-60", where in "Student ID-2", "Student ID" refers to the field and "2" refers to the value of the field, and so on. The driven table may include a data record 2 and a data record 3, where the data record 2 may be "Student ID-3, Student Name-Li Si, Gender-Female" and the data record 3 may be "Student ID-2, Student Name-Wang Wu, Gender-Male". A data join can be performed between the data record 1 and the data record 2. During the data join, matching processing is performed on the data record 1 and the data record 2. Because a value of a target field "Student ID" in the data record 1 and a value of a target field "Student ID" in the data record 2 are different, matching between the data record 1 and the data record 2 is determined to be unsuccessful. A data join is performed between the data record 1 and the data record 3. During the data join, matching processing is performed on the data record 1 and the data record 3. Because the value of the target field "Student ID" in the data record 1 and a value of a target field "Student ID" in the data record 3 are the same, matching between the data record 1 and the data record 3 is determined to be successful. Combination processing is performed on the data record 1 and the data record 3 to obtain a target data record. For example, the target data record may include "Student ID-2, Course ID-1, Score-60, Student Name-Wang Wu, Gender-Male". Of course, fields in the target data record depend on a data query instruction and are not limited to this example. For example, the target data record may alternatively include "Student ID-2, Course ID-1, Score-60, Student Name-Wang Wu". If a data record in the driving table fails to match any data record in the driven table, the target data record may not be generated, or may be generated solely based on the data record in the driving table, and missing values in the target data record are marked. For example, the target data record may be "Student ID-2, Course ID-1, Score-60, Student Name-null, and Student Gender-null". In this embodiment of the present disclosure, no limitation is imposed on the data join method used in the data join execution plan. For example, the data join method may be a nested loop join, a hash join, or a sort-merge join.

In some embodiments, operation 101 may be implemented by an optimizer in a database management system.

Operation 102: Execute a sub-plan for joining a data record selected from the driving table with the driven table, and collect statistical information in a process of executing the sub-plan.

The data join execution plan in operation 101 is generated based on estimation and no fixed materialization operator (e.g., there is an adaptive materialization operator instead) in the data join execution plan. This means that the data join execution plan is intended to be executed without materialization. However, due to the impact of various factors (such as, statistical information, a cost model, and various assumptions), an estimation deviation problem is inevitable. This may cause a data join execution plan that is expected to include a materialization operator but instead does not include the materialization operator. Therefore, in this embodiment of the present disclosure, adaptive materialization is performed based on an execution status of the data join execution plan.

For example, one data record is selected from the driving table; and for the selected data record, the sub-plan configured for a data join is executed once on the driven table. Execution information is detected in the process of executing the sub-plan. The overhead of executing the sub-plan once is within an acceptable range, while the execution information can be obtained accurately and quickly. The execution information (also referred to as statistical information) refers to at least one indicator indicative of execution cost of the data join execution plan, includes at least one piece of statistical information of the driving table and/or the driven table, and is configured for reflecting whether the data join execution plan suffers from performance degradation due to unfixed materialization operators. For example, the execution information may include at least one of a quantity of data records in the driving table and a proportion of valid data records in the driven table. The quantity of data records in the driving table is the same as a repeated execution count of the sub-plan. Therefore, a larger quantity of data records in the driving table leads to a higher execution cost of the data join execution plan. A smaller proportion of valid data records in the driven table results in a large proportion of ineffective operations in the process of executing the data join execution plan (because a larger proportion of invalid data records needs to be scanned), and a high execution cost of the data join execution plan.

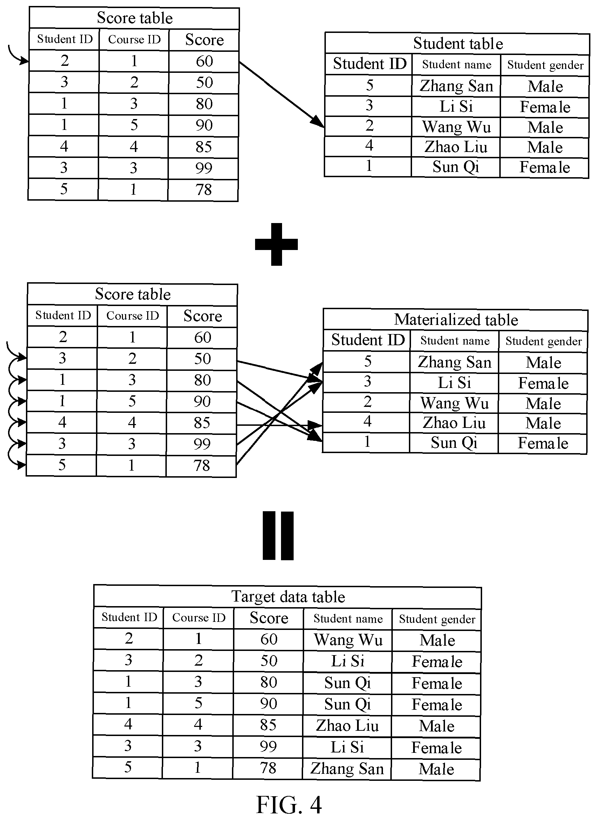

As an example, this embodiment of the present disclosure provides a schematic diagram of a data table as shown in FIG. 4. The driving table is the score table, and the driven table is the student table. In operation 102, a data join may be performed between the first data record in the score table and all data records in the student table.

Operation 103: Materialize the driven table based on the execution information to obtain a materialized table.

The execution information can accurately reflect whether the data join execution plan suffers from performance degradation due to unfixed materialization operators. Therefore, when performance degradation is detected, the materialization operation can be performed on the driven table to obtain the materialized table. Specifically, the materialization operation can be performed on at least a part of data records in the driven table to obtain the materialized table. In FIG. 4, an example in which the materialization operation is performed on all data records in the student table to obtain the materialized table is used.

In some embodiments, the foregoing operation of materializing the driven table based on the execution information, to obtain the materialized table can be implemented as follows: preferentially storing, when the quantity of data records in the driving table exceeds a preset quantity threshold (e.g., 1,000 records) and the proportion of valid data records in the driven table is below a preset proportion threshold (e.g., 20%), the data records in the driven table in an internal memory in binary format; allocating internal memory space for the data records using an internal memory allocation function (e.g., malloc); and writing the data records sequentially into an allocated internal memory region, to obtain a materialized table in the internal memory. In a storage process, remaining storage space of a current internal memory is acquired by using an internal memory management interface (such as getrusage) provided by an operating system. In addition, it is assumed that an average size of remaining to-be-stored data records in the driven table is *S_{avg}*, and the quantity is *Nᵣₑₘₐᵢₙ*. Therefore, storage space *S_{need}* needed by the remaining to-be-stored data records may be obtained by using the formula *S_{need}* = *S_{avg}* × *Nᵣₑₘₐᵢₙ* through estimation. When the acquired remaining storage space of the internal memory is less than the estimated needed storage space, data records that are in the driven table and that have not been stored in the internal memory are stored in a magnetic disk in a form of a file, and a magnetic disk file is created and written by using file operation functions (such as fopen and fwrite), to obtain a materialized table in the magnetic disk.

Herein, because the internal memory provides higher data access efficiency than the magnetic disk, the data records in the driven table (i.e., the data records to be materialized) may be preferentially stored in the internal memory, to obtain the materialized table in the internal memory. When the storage space of the internal memory is insufficient, the data records in the driven table that have not been stored in the internal memory are stored in the magnetic disk, to obtain the materialized table in the magnetic disk.

If the foregoing materialization operation process involves only the internal memory, a data join is subsequently performed between the driving table and the materialized table in the internal memory. If the foregoing materialization operation process involves both the internal memory and the magnetic disk, a data join is subsequently performed between the driving table and the materialized table in the internal memory as well as the materialized table in the magnetic disk.

In the foregoing manner, the data records in the driven table are preferentially stored in the internal memory, and because the internal memory provides higher data access efficiency than the magnetic disk, the efficiency of subsequent data join can be effectively improved.

Operation 104: Stop executing the execution plan and perform a data join between the driving table and the materialized table.

Herein, execution of the data join execution plan is stopped and the data join is performed on the driving table and the materialized table. In this way, during the data join process, the data records in the materialized table are accessed directly, to avoid scanning the driven table a plurality of times and effectively improve data join efficiency.

For one data record in the driving table that has already undergone the data join in operation 102, a repeated data join is not required in operation 104. In this way, unnecessary resource waste can be avoided and data join efficiency can be improved. As shown in FIG. 4, the data join is performed between each remaining data record in the score table (i.e., each data record other than the first data record) and all data records in the materialized table. A target data table (i.e., a target data table including a plurality of target data records) may be built based on the target data record obtained through the data join in operation 102 and the target data records obtained through the data join in operation 104 and is used as a response to the data query instruction. For example, the target data table may be used as a data query result and transmitted to an initiator of the data query instruction.

In some embodiments, operation 102 to operation 104 may be implemented by an executor in the database management system.

In some embodiments, the data join execution plan includes a data filtering condition corresponding to the driven table. The foregoing operation of executing the sub-plan for joining the data record selected from the driving table with the driven table may be implemented as follows: performing filtering processing on a plurality of data records in the driven table based on the data filtering condition corresponding to the driven table, to obtain at least one valid data record in the driven table; and performing the data join between one data record in the driving table and all valid data records in the driven table. The statistical information associated with the execution plan about data records in the driven table may be collected during the filtering processing. The foregoing operation of materializing the driven table based on the execution information, to obtain the materialized table may be implemented as follows: materializing all valid data records in the driven table based on the execution information, to obtain the materialized table.

The data filtering condition refers to a condition that is extracted from the data query instruction and is configured for filtering data records in the data table. Based on this condition, data records in the data table can be classified as a valid data record and an invalid data record, and the condition may be set according to the practical application scenario.

The valid data record refers to a data record in the data table that satisfies the corresponding data filtering condition. If the data join execution plan includes the data filtering condition corresponding to the driven table, the valid data records in the driven table are data records that satisfy the filtering condition. If the data join execution plan includes the data filtering condition corresponding to the driving table, the valid data records in the driving table are data records that satisfy the filtering condition.

Herein, the data filtering condition corresponding to the driven table is extracted from the data query instruction and may be set according to the practical application scenario.

Next, in a case that the data join execution plan includes the data filtering condition corresponding to the driven table, a single execution process of the sub-plan is described. First, filtering processing is performed on the data records in the driven table based on the data filtering condition corresponding to the driven table, to obtain the valid data records in the driven table. That is, the valid data records in the driven table satisfy the data filtering condition corresponding to the driven table, and the quantity of valid data records in the driven table is at least one. Then, the data join is performed between one data record in the driving table (any data record, for example, the first data record) and all valid data records in the driven table.

Because invalid data records in the driven table do not satisfy the data filtering condition corresponding to the driven table and are not needed by the data query instruction, the materialization operation is only performed on all valid data records in the driven table, to obtain the materialized table. Herein, the invalid data records refer to data records that are distinct from the valid data records. This can reduce the overhead of the materialization operation process and the cost of subsequently scanning the materialized table. Based on the obtained materialized table, the data join is performed between each remaining data record in the driving table and all data records in the materialized table. The invalid data records refer to data records in a data table that are distinct from the valid data records, that is, data records that do not satisfy the corresponding data filtering condition.

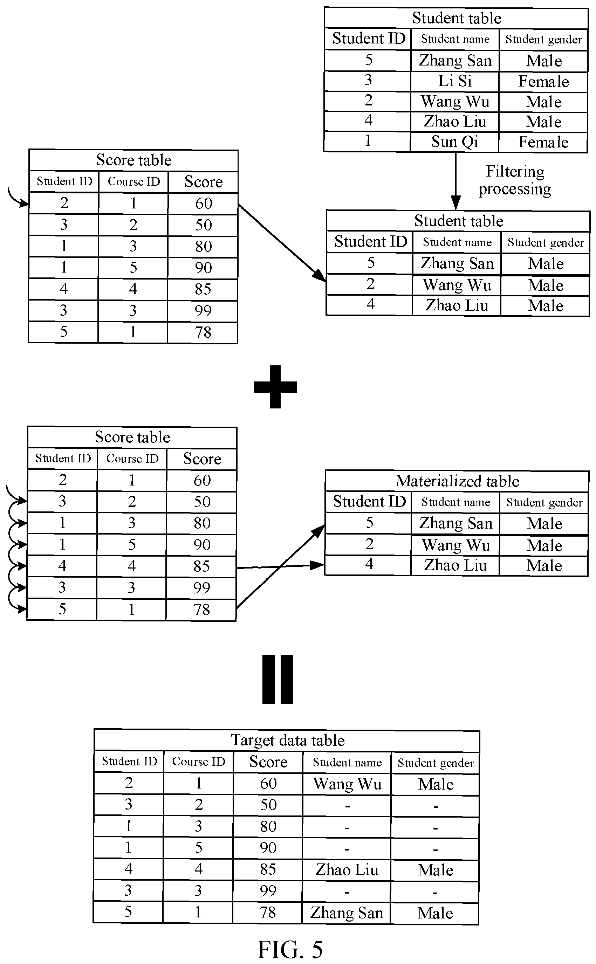

As an example, this embodiment of the present disclosure provides a schematic diagram of a data table shown in FIG. 5. An example in which a data filtering condition corresponding to a driven table (a student table) is that the student gender is male is used, and a filtered student table (including only valid data records) and a finally obtained target data table are shown. A target data record with a missing value may not be included in the target data table.

In the foregoing manner, in a case that the data filtering condition corresponding to the driven table is determined, filtering processing is performed on a plurality of data records in the driven table to obtain at least one valid data record in the driven table. In this way, a data volume of subsequent processing can be reduced, unnecessary resource overhead is avoided, and processing efficiency is improved.

In some embodiments, the data join execution plan includes the data filtering condition corresponding to the driving table. The foregoing operation of selecting one data record from the driving table and executing, for the selected data record, the sub-plan configured for the data join on the driven table may be implemented as follows: performing filtering processing on the plurality of the data records in the driving table based on the data filtering condition corresponding to the driving table, to obtain a plurality of valid data records in the driving table; and performing the data join between one valid data record in the driving table and at least a part of the data records in the driven table. The statistical information associated with the execution plan about data records in the driving table may be collected during the filtering processing. The foregoing operation of performing the data join between the driving table and the materialized table may be implemented as follows: performing the data join between each remaining valid data record in the driving table and all data records in the materialized table.

Herein, the data filtering condition corresponding to the driving table is extracted from the data query instruction, and may be set according to a practical application scenario.

Next, in a case that the data join execution plan includes the data filtering condition corresponding to the driving table, a single execution process of the sub-plan is described. First, filtering processing is performed on a plurality of data records in the driving table based on the data filtering condition corresponding to the driving table, to obtain a plurality of valid data records in the driving table. Then, the data join is performed between one valid data record in the driving table (any valid data record, for example, the first valid data record) and at least a part of the data records in the driven table. In a subsequent materialization operation process, the materialization operation is performed on at least a part of the data records in the driven table, to obtain the materialized table. If the data join execution plan includes the data filtering condition corresponding to the driven table, a part of the data records in the driven table refers to all valid data records in the driven table. If the data join execution plan does not include the data filtering condition corresponding to the driven table, a part of the data records in the driven table refers to all data records in the driven table.

Because the invalid data records in the driving table do not satisfy the data filtering condition corresponding to the driving table and are not needed by the data query instruction, based on the obtained materialized table, the data join is performed between each remaining valid data record in the driving table (i.e., each valid data record that has not undergone the data join) and all data records in the materialized table. The invalid data records refer to data records that are distinct from the valid data records.

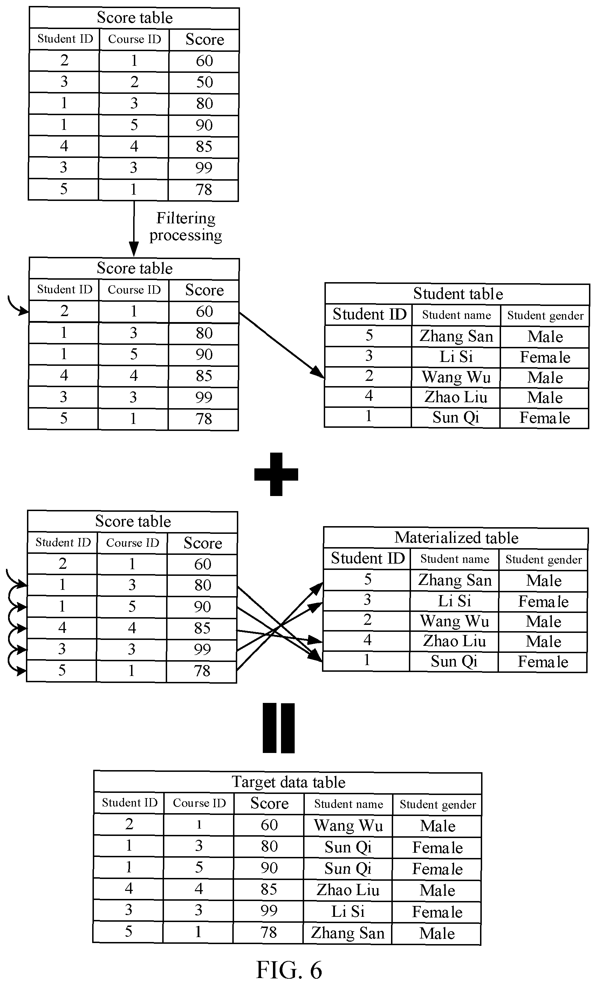

As an example, this embodiment of the present disclosure provides a schematic diagram of a data table shown in FIG. 6. An example in which a data filtering condition corresponding to the driving table (the score table) is that score is greater than or equal to 60 is used, the filtered score table (including only valid data records) and the finally obtained target data table are illustrated.

In the foregoing manner, in a case that the data filtering condition corresponding to the driving table is determined, filtering processing is performed on the plurality of data records in the driving table based on the data filtering condition, to obtain the plurality of valid data records in the driving table; and each valid data record in the driving table is then applied to the data join, to improve the accuracy and necessity of the data join and avoid unnecessary resource overhead.

In some embodiments, the data join execution plan includes the data filtering condition corresponding to the driving table as well as the data filtering condition corresponding to the driven table. The foregoing operation of selecting one data record from the driving table and executing, for the selected data record, the sub-plan configured for the data join on the driven table once may be implemented as follows: performing filtering processing on the plurality of data records in the driving table based on the data filtering condition corresponding to the driving table, to obtain the plurality of valid data records in the driving table; performing filtering processing on the plurality of data records in the driven table based on the data filtering condition corresponding to the driven table, to obtain at least one valid data record in the driven table; and performing the data join between one valid data record in the driving table and all valid data records in the driven table. The foregoing operation of materializing the driven table based on the execution information, to obtain the materialized table may be implemented as follows: materializing all valid data records in the driven table based on the execution information, to obtain the materialized table. The foregoing operation of performing the data join between the driving table and the materialized table may be implemented as follows: performing the data join between each remaining valid data record in the driving table and all data records in the materialized table.

Herein, in a case that the data join execution plan includes both the data filtering condition corresponding to the driving table and the data filtering condition corresponding to the driven table, filtering processing may be performed separately on the driving table and the driven table and then subsequent processing is performed.

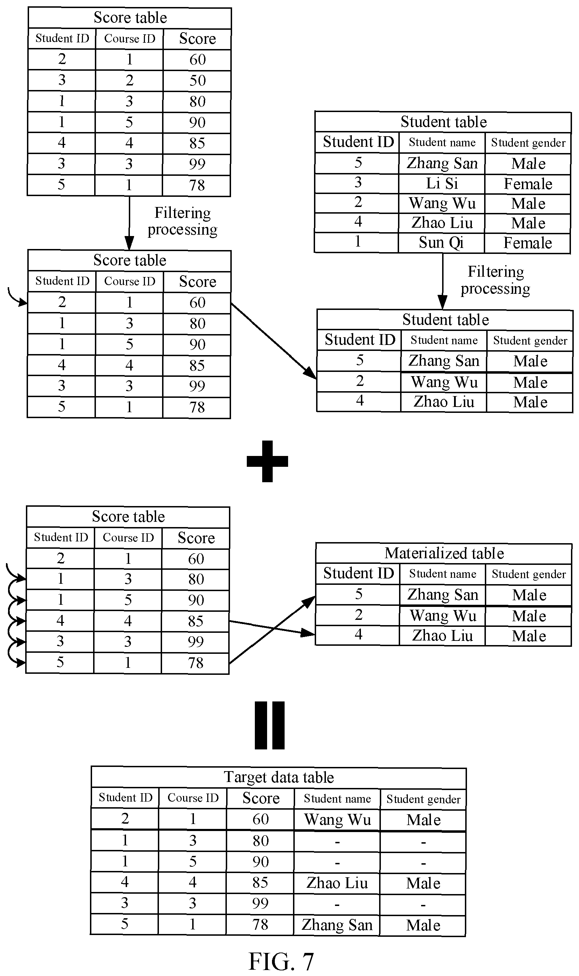

As an example, this embodiment of the present disclosure provides a schematic diagram of a data table as shown in FIG. 7. An example in which the data filtering condition corresponding to the driven table (the student table) is student gender being male and the data filtering condition corresponding to the driving table (the score table) is score greater than or equal to 60 is used, the filtered student table (including only valid data records), the filtered score table (including only valid data records), and the finally obtained target data table are illustrated.

As shown in FIG. 3A, in this embodiment of the present disclosure, under the premise that no materialization operator is fixed in the data join execution plan for the database, one data record is selected from the driving table, a sub-plan configured for a data join is executed, for the selected data record, on the driven table once, and execution information is detected in the process of executing the sub-plan. By executing the sub-plan once, the execution information can be obtained quickly and accurately, and the overhead is within an acceptable range. The obtained execution information can accurately reflect whether the data join execution plan suffers from performance degradation due to unfixed materialization operators. Then, when performance degradation occurs, the materialization operation is performed on the driven table to obtain the materialized table, execution of the data join execution plan is stopped and the data join is subsequently performed between the driving table and the materialized table. In this way, the data join execution plan that does not have a fixed materialization operator is adaptively added with the materialization operator to compensate for performance degradation, effectively improve database performance, and enable rapid response.

In some embodiments, FIG. 3B is a schematic flowchart of an adaptive database materialization method according to an embodiment of the present disclosure. Operation 103 shown in FIG. 3A may be updated to operation 201. Operation 201: Perform, when execution information satisfies an execution pressure condition, the materialization operation on the driven table to obtain the materialized table.

Herein, the execution information refers to an indicator indicative of execution costs of the data join execution plan, includes at least one characteristic of the driving table and/or the driven table, and the execution pressure condition can be preset for the execution information. When the execution information satisfies the execution pressure condition, it indicates that the data join execution plan suffers from performance degradation due to the absence of a fixed materialization operator. The performance improvement brought by materialization can compensate for the overhead of materialization; and therefore, the materialization operation is performed on the driven table to obtain the materialized table.

In some embodiments, the execution information includes at least one of the following: a quantity of data records in the driving table, or a proportion of valid data records in the driven table. The execution pressure condition includes at least one of the following: the quantity of data records in the driving table is greater than or equal to a quantity threshold, or the proportion of valid data records in the driven table is less than a proportion threshold.

The quantity threshold is a preset numerical value and configured for determining whether the quantity of data records in the driving table reaches a scale. When the quantity of data records in the driving table is greater than or equal to the quantity threshold, it may be determined that the data join execution plan suffers from performance degradation, and a materialization operation may be required to achieve performance optimization. The numerical value may be set based on the performance of the database and historical query data.

The proportion threshold is a preset proportion value and is configured for determining whether the proportion of valid data records in the driven table is excessively low. When the proportion of valid data records in the driven table is less than the proportion threshold, it may be determined that the data join execution plan suffers from performance degradation, and a materialization operation may be required to achieve performance optimization. The proportion value may be adjusted according to practical application scenarios.

Herein, the execution information may include at least one of the quantity of data records in the driving table or the proportion of valid data records in the driven table. The quantity of data records in the driving table is the same as the repeated execution count of the sub-plan. Therefore, a larger quantity of data records in the driving table leads to a higher execution cost of the data join execution plan. A smaller proportion of valid data records in the driven table results in a large proportion of ineffective operations in the process of executing the data join execution plan (because a larger proportion of invalid data records needs to be scanned), and a high execution cost of the data join execution plan.

Based on this, the execution pressure condition includes at least one of the following: the quantity of data records in the driving table is greater than or equal to the quantity threshold; and the proportion of valid data records in the driven table is less than the proportion threshold. When the quantity of data records in the driving table is greater than or equal to the quantity threshold, the sub-plan needs to be executed an excessive number of times, indicating that the data join execution plan suffers from performance degradation. Therefore, performance optimization is implemented through materialization. When the proportion of valid data records in the driven table is less than the proportion threshold, invalid data records occupying an excessively large proportion in the driven table need to be repeatedly scanned, indicating that the data join execution plan suffers from performance degradation. Therefore, performance optimization is implemented through materialization. If the data filtering condition corresponding to the driving table exists, the "quantity of data records in the driving table" in the execution information may be the "quantity of valid data records in the driving table", and "the quantity of data records in the driving table is greater than or equal to the quantity threshold" in the execution pressure condition may be "the quantity of valid data records in the driving table is greater than or equal to the quantity threshold".

In the foregoing manner, whether the data join execution plan suffers from performance degradation is evaluated from both the driving table and the driven table, to ensure the necessity of the materialization operation, that is, the materialization operation can provide tangible performance optimization. Meanwhile, the execution information and the execution pressure condition may be configured according to points of concern in practical application scenarios, to achieve greater flexibility and freedom.

In FIG. 3B, after operation 102 shown in FIG. 3A, operation 202 may be performed: Execute, starting from a next unprocessed data record in the driving table when the execution information does not satisfy the execution pressure condition, the sub-plan on the driving table and the driven table sequentially until all data records in the driving table are processed.

When the execution information does not satisfy the execution pressure condition, it indicates that the data join execution plan does not suffer from performance degradation due to the absence of a fixed materialization operator. The performance improvement brought by materialization may not compensate for the consumption of materialization. Therefore, starting from the next unprocessed data record in the driving table, the sub-plan is executed sequentially on the driving table and the driven table until all data records in the driving table are processed, that is, until the sub-plan is executed for each data record (or each valid data record) in the driving table. At this point, execution of the data join execution plan is completed.

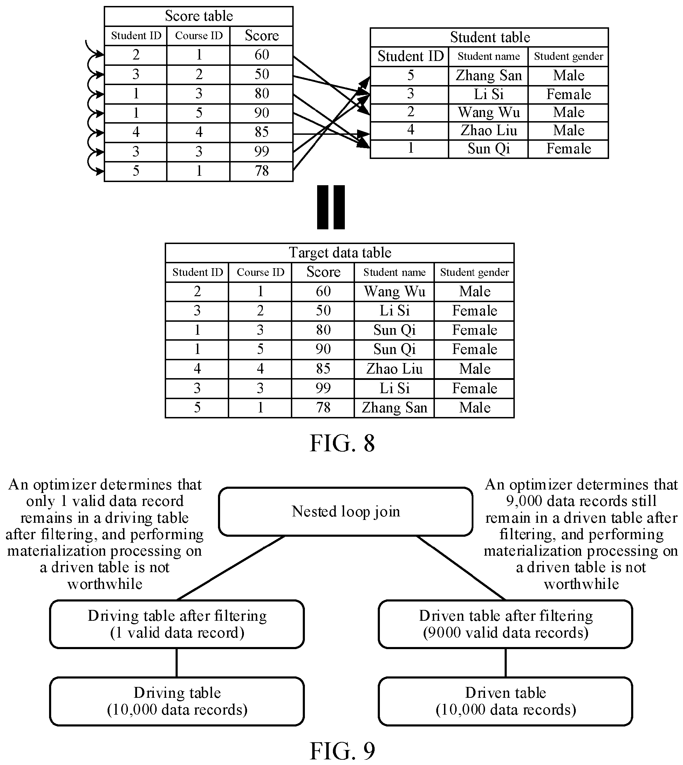

As an example, this embodiment of the present disclosure provides a schematic diagram of a data table shown in FIG. 8, which shows a process of repeatedly executing a sub-plan and a finally obtained target data table.

As shown in FIG. 3B, in this embodiment of the present disclosure, the detected execution information is compared with the execution pressure condition to evaluate whether the data join execution plan suffers from performance degradation due to the absence of a fixed materialization operator. When the data join execution plan suffers from performance degradation due to the absence of the fixed materialization operator, performance optimization is implemented through materialization. When the data join execution plan does not suffer from performance degradation in the absence of the fixed materialization operator, in view of the fact that the performance improvement brought by materialization may not compensate for the overhead of materialization, the sub-plan is executed sequentially, starting from the next unprocessed data record in the driving table, on the driving table and the driven table until all data records in the driving table are processed, to ensure that execution of the data join execution plan is successfully completed.

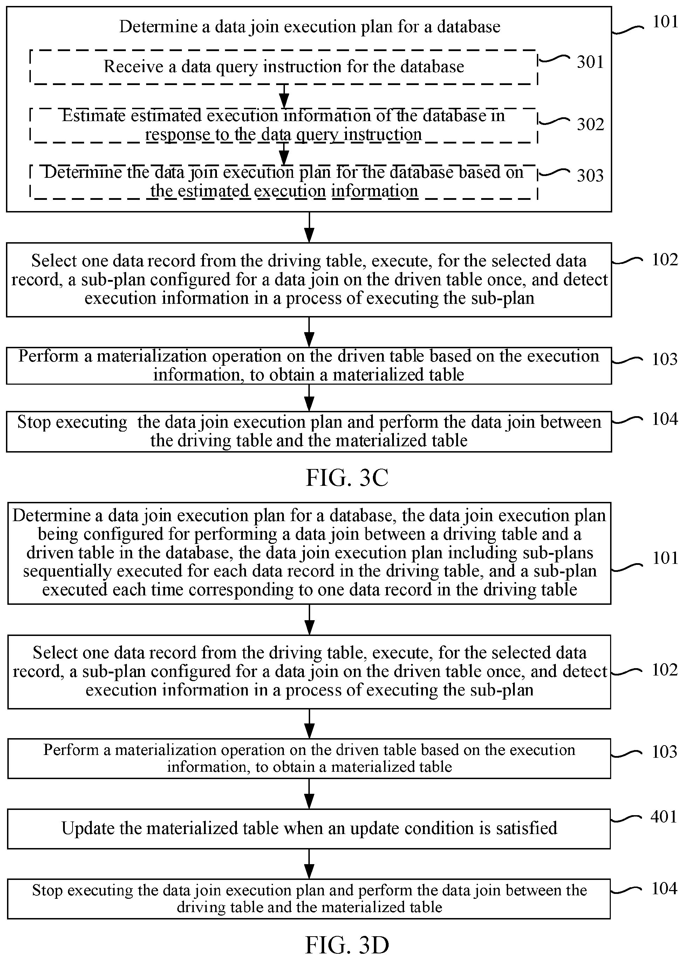

In some embodiments, FIG. 3C is a schematic flowchart of an adaptive database materialization method according to an embodiment of the present disclosure. Operation 101 shown in FIG. 3A may be implemented by operation 301 to operation 303, and is described with reference to each operation.

Operation 301: Receive a data query instruction for a database.

Herein, the data query instruction for the database is received, and the data query instruction is related to a plurality of data tables in the database.

Operation 302: Estimate execution information associated with the data query instruction of the database.

Herein, estimation is performed on the plurality of data tables that are related to the data query instruction in the database, to estimate the execution information of the database in response to the data query instruction (i.e., performing the data join operation). The estimated execution information refers to related information, that is obtained by estimating the plurality of data tables in the database that are related to the data query instruction, of the database in response to the data query instruction (i.e., performing the data join operation). The specific content of the estimated execution information may refer to that of the execution information, such as the quantity of data records in the driving table and the proportion of valid data records in the driven table. However, due to an estimation deviation problem, the estimated execution information may not be accurate.

Operation 303: Determine the data join execution plan for the database based on the estimated execution information.

Based on the obtained estimated execution information, the data join execution plan for the database can be determined. The data join execution plan determined in operation 303 refers to an execution plan without a fixed materialization operator, that is, the execution plan includes the sub-plans executed sequentially for each data record in the driving table.

In some embodiments, operation 302 and operation 303 may be implemented through a cost system of an optimizer.

In some embodiments, the operation of determining the data join execution plan for the database based on the estimated execution information may be implemented in the following manner: determining, when the estimated execution information does not satisfy the execution pressure condition, an execution plan that applies a nested loop join and that does not have a fixed materialization operator as the data join execution plan for the database. After the operation of estimating the estimated execution information of the database in response to the data query instruction, the adaptive database materialization method further includes: determining, when the estimated execution information satisfies the execution pressure condition, an execution plan that applies a nested loop join and that has a fixed materialization operator as an alternative execution plan for the database, or determining an execution plan that applies a hash join or a sort-merge join as an alternative execution plan for the database.

The adaptive database materialization method provided in this embodiment of the present disclosure can be specifically used in nested loop joins, to solve a problem of high algorithmic complexity of the nested loop joins when handling large data volumes. For example, when the estimated execution information does not satisfy the execution pressure condition, it indicates that the volume of data to be processed for the data join is relatively small. In this case, a data join algorithm can use the nested loop join suitable for processing small data volumes. Moreover, it indicates that the execution plan does not suffer from performance degradation in the absence of the fixed materialization operator, and therefore, there is no need to fix the materialization operator in the execution plan. Based on this, the execution plan that applies the nested loop join and that does not have the fixed materialization operator is determined as the data join execution plan for the database, and adaptive materialization is subsequently performed through operation 102 to operation 104.

When the estimated execution information satisfies the execution pressure condition, it indicates that the volume of data to be processed for the data join is relatively large. Therefore, an execution plan that applies a nested loop join and that has a fixed materialization operator is determined as the alternative execution plan for the database, to improve the algorithmic performance of the nested loop join when handling large data volumes through the materialization operator. For example, the alternative execution plan includes a sub-plan that only needs to be executed once. During the execution of the alternative execution plan, one data record is first selected from the driving table, and for the selected data record, the sub-plan configured for the data join is executed on the driven table once. Subsequently, a materialization operation is performed on the driven table to obtain a materialized table. Finally, the data join is performed between the driving table and the materialized table. The process of performing the data join between the driving table and the materialized table is a part of the alternative execution plan and is different from the foregoing operation 104.

When the estimated execution information satisfies the execution pressure condition, an execution plan that applies a hash join or a sort-merge join may alternatively be determined as the alternative execution plan for the database. Compared with the nested loop join, the hash join and the sort-merge join exhibit superior performance when handling large data volumes. The alternative execution plan determined in this manner can be executed normally.

In the foregoing manner, for the data join execution plan that applies the nested loop join and that is expected to include a materialization operator but instead does not include the materialization operator, performance optimization is implemented through adaptive materialization, to solve a problem of high algorithmic complexity of the nested loop join when handling large data volumes.

In some embodiments, the operation of estimating the estimated execution information of the database in response to the data query instruction may be implemented in the following manner: determining pre-stored statistical information of the plurality of data tables in the database that are related to the data query instruction. The pre-stored statistical information includes a total quantity of data records in each table, high-frequency values, histograms, correlation coefficients, and the like. For the high-frequency values, values of each field in the data table are traversed to calculate an occurrence count of each value. Values whose occurrence count exceeds a preset frequency threshold (e.g., occurrence count accounting for 10% of the total quantity of records) are considered the high-frequency values. For the histograms, value domain of each field is divided into a plurality of intervals, and a quantity of data records in each interval is calculated to form the histogram. For the correlation coefficients, the Pearson correlation coefficient formula is used to measure the correlation between fields. The Pearson correlation coefficient is defined as follows: the numerator is the sum, from the first observed value to an nth observed value, of the product of the deviation of a value of the first field in each observed value from an average value of the first field and the deviation of a value of the second field in each observed value from an average value of the second field; and the denominator is the square root of the product of the sum of squared deviations of each observed value of the first field from the average value of the first field and the sum of squared deviations of each observed value of the second field from an average value of the second field. n denotes a quantity of observed values. For the driving table, fields involved in the filtering condition are analyzed based on the filtering condition in the data query instruction. If the field involved in the filtering condition contains high-frequency values, an occurrence count of the high-frequency values within the filtering condition range is calculated. It is assumed that the total quantity of data records in the pre-stored statistical information of the driving table is N, the occurrence count of high-frequency values within the filtering condition range is n, and the distribution of the high-frequency values represents the overall data distribution. Then, the quantity of data records in the driving table is estimated as: *N* × *n*/*N_{the total quantity of high-frequency values}*, *N_{the total quantity of high-frequency values}* denotes the total occurrence count of the high-frequency values. For the driven table, fields involved in the filtering condition are determined based on the data filtering condition corresponding to the driven table in the data query instruction. A proportion of data records within the filtering condition range is calculated by using the histogram in the pre-stored statistical information of the driven table. Furthermore, the proportion is adjusted based on the correlation coefficient. If the proportion obtained from histogram statistics is *p*₁ and the correlation coefficient is r, the proportion of valid data records in the driven table is estimated as *p* = *p*₁ × *r*. The quantity of data records in the driving table and the proportion of valid data records in the driven table, which are obtained through estimation, are used as the estimated execution information of the database in response to the data query instruction.

Herein, first, the pre-stored statistical information of the plurality of data tables in the database that are related to the data query instruction is determined. The specific content included in the pre-stored statistical information is not limited. For example, the pre-stored statistical information may include high-frequency values (values with occurrence frequency greater than a frequency threshold), histograms, correlation coefficients, and the like. The timing for collecting the pre-stored statistical information is not limited. For example, statistical processing may be periodically performed on the data tables in the database to obtain pre-stored statistical information; alternatively, the statistical processing may be triggered when the data tables satisfy particular conditions (e.g., a data update), so as to keep the s pre-stored statistical information as consistent as possible with an actual situation.

Then, estimation processing is performed according to the data query instruction and pre-stored statistical information of the plurality of data tables, to obtain the estimated execution information of the database in response to the data query instruction. For example, the driving table is determined from the plurality of data tables according to the data query instruction, and the quantity of data records in the driving table is acquired from pre-stored statistical information of the driving table and used as the estimated execution information; and/or the driven table is determined from the plurality of data tables according to the data query instruction, and the proportion of valid data records in the driven table is determined, based on the data filtering condition corresponding to the driven table in the data query instruction and pre-stored statistical information of the driven table, as the estimated execution information.

In the foregoing manner, estimation processing is performed with reference to the data query instruction and the pre-stored statistical information obtained through statistical processing, so that an execution status in response to the data query instruction can be estimated, to facilitate determining an appropriate data join execution plan.

As shown in FIG. 3C, in this embodiment of the present disclosure, the data query instruction for the database is received, the estimated execution information of the database in response to the data query instruction is estimated, and the data join execution plan for the database is determined based on the estimated execution information. In this manner, the origin of the data join execution plan is explained. Because an estimation deviation problem is inevitable during the process of determining the data join execution plan, this embodiment of the present disclosure addresses the estimation deviation problem through adaptive materialization, to achieve performance optimization.

In some embodiments, FIG. 3D is a schematic flowchart of an adaptive database materialization method provided in this embodiment of the present disclosure. After operation 103 shown in FIG. 3A, operation 401 may be performed: Update the materialized table when an update condition is satisfied, the update condition including at least one of: detecting an update in the driven table; and reaching an update cycle.

Herein, the data join execution plan may need to be executed a plurality of times. For example, continuous queries of data in the database are needed in some scenarios. However, the driven table in the database may not remain unchanged and may be, for example, updated at any time, such as through insertion, deletion, or modification of data records. If the initially obtained materialized table is continuously used for the data join, inaccurate data query results may be generated. In view of this, when the update condition is satisfied, the materialized table is updated to ensure the accuracy of data records in the materialized table. Then, the data join may be performed between the driving table and the updated materialized table to obtain data query results.

The update condition may include detecting an update in the driven table. If the data join execution plan includes the data filtering condition corresponding to the driven table, the update condition may further include detecting an update in valid data records in the driven table (i.e., data records satisfying the data filtering condition corresponding to the driven table). In this manner, the necessity of updating the materialized table can be improved, to avoid unnecessary resource overhead.

The update condition may alternatively include reaching an update cycle. For example, the materialized table may be set to update once every 10 seconds.

In some embodiments, the foregoing operation of updating the materialized table may be implemented in the following manner: performing any one of the following processing: performing a materialization operation on the driven table again to implement a full update of the materialized table; and performing comparison processing on the driven table and the materialized table to obtain an update data record, and performing an incremental update on the materialized table based on the update data record. For the full update, all data records in the original materialized table are cleared, and, according to a previously performed materialization operation process, data records in the driven table (or valid data records if the data filtering condition exists) are re-stored in the internal memory or on the magnetic disk to overwrite the original materialized table, to complete the full update. For the incremental update, hash table-based comparison processing is used. First, primary keys of the driven table and the materialized table are used as keys, and data records are used as values, to respectively build hash tables. Then, the hash table of the driven table is traversed. If the primary key does not exist in the hash table of the materialized table, the data record is determined as an update data record to be added. If the primary key exists but values of other fields are different, the data record in the driven table is determined as an update data record to be updated. Next, the hash table of the materialized table is traversed. If the primary key does not exist in the hash table of the driven table, the data record is determined as an update data record to be deleted. The materialized table is then subjected to corresponding deletion, addition, and update operations based on the update data records, to achieve incremental update. For the update data record to be deleted, data records having the same primary keys are searched for in the materialized table and deleted. For the update data record to be added, the record is inserted into the materialized table. For the update data record to be updated, data records having the same primary keys are searched for in the materialized table, and values of other fields of the data records are updated to be consistent with values of corresponding data records in the driven table.

The materialization operation is performed on the driven table again to implement the full update of the materialized table. The specific procedure is as follows: clearing all data records in the original materialized table and re-storing, according to the previously performed materialization operation process, data records in the driven table (or valid data records if the data filtering condition exists) in the internal memory or on the magnetic disk to overwrite the original materialized table, to complete the full update. The full update refers to a manner of updating the materialized table, specifically involving clearing all data records in the original materialized table and re-storing the data records in the driven table (or valid data records if the data filtering condition exists) in the internal memory or on the magnetic disk to overwrite the original materialized table.

The comparison processing is performed on the driven table and the materialized table to obtain the update data record, and the incremental update is performed on the materialized table based on the update data record. The comparison processing is specifically performed as follows: comparing the data records in the two tables row by row based on the primary keys of the driven table and the materialized table; determining, if a data record in the materialized table has a primary key that is not present in the driven table, the data record as an update data record to be deleted; determining, if a data record in the driven table has a primary key that is not present in the materialized table, the data record as an update data record to be added; and determining, if data records in both tables have the same primary key but different values in other fields, the data record in the driven table as an update data record to be updated. The materialized table is then subjected to corresponding deletion, addition, and update operations based on the update data record, to achieve the incremental update. For the update data record to be deleted, data records having the same primary keys are searched for in the materialized table and deleted. For the update data record to be added, the record is inserted into the materialized table. For the update data record to be updated, data records having the same primary keys are searched for in the materialized table, and values of other fields of the data records are updated to be consistent with values of corresponding data records in the driven table.

Herein, two manners of updating the materialized table are provided. The first manner involves materializing the driven table again to overwrite the original materialized table with a newly obtained materialized table, to implement the full update of the materialized table.

The second manner involves performing the comparison processing on the driven table and the materialized table to obtain the update data record, and performing the incremental update on the materialized table based on the update data record. The incremental update refers to a manner of updating the materialized table and specifically involves performing the comparison processing on the driven table and the materialized table to obtain the update data record, and performing corresponding deletion, addition, and update operations on the materialized table based on the update data record, to only update the part of the materialized table that is related to the update data record. For example, after comparison processing is performed on the driven table and the materialized table, if it is determined that the materialized table lacks one data record that exists in the driven table, the data record is determined as the update data record, and the update data record is added to the materialized table. As another example, after comparison processing is performed on the driven table and the materialized table, if it is determined that the materialized table includes an additional data record that does not exist in the driven table, the data record is determined as the update data record and deleted from the materialized table. As another example, after comparison processing is performed on the driven table and the materialized table, if it is determined that two data records have the same value in a target field (for ease of distinction, one data record belonging to the driven table is referred to as the data record A, and one data record belonging to the materialized table is referred to as the data record B) but have different values of other fields, the data record A is determined as the update data record to be updated and values of the data record B are updated to be consistent with values of the update data record. The incremental update manner can improve update efficiency, reduce a calculation amount, and help improve data query efficiency.

As shown in FIG. 3D, in this embodiment of the present disclosure, when the update condition is satisfied, the materialized table is updated to ensure that the data records in the materialized table are consistent with the data records in the driven table, thereby ensuring the accuracy of data query results. This manner is applicable to scenarios in which the data join execution plan needs to be executed a plurality of times.

The following describes exemplary application of this embodiment of the present disclosure in a practical application scenario.

First, data join is described. When the database performs a data join, there are three physical join operators available for selection typically, namely nested loop join, hash join, and merge-sort join. This embodiment of the present disclosure provides performance optimization specifically for nested loop join.

An execution process of nested loop join is illustrated in FIG. 8. For each row of data in the driving table (score table), a data scan is performed on the driven table (student table). If a quantity of rows in the driving table is large, the driven table needs to be scanned a plurality of times. In such a case, a materialization operation (caching process) may be performed on the driven table, so that data in the materialized table can be directly accessed, to avoid scanning the driven table a plurality of times.

In the absence of materialization, the algorithmic complexity of nested loop join is O(MN), where M represents a quantity of rows in the driving table and N represents a quantity of rows in the driven table. In the presence of a materialization operator, the algorithmic complexity of nested loop join is O(N + (M-1)K) + O(K), where K represents the cost of scanning the materialized table, and O(K) represents the time cost incurred by materializing K data records in the driven table.

A scenario in which both the driving table and the driven table have a data filtering condition is used as an example. For the driving table, if the quantity of remaining rows M in the driving table after filtering is small, materialization is unnecessary. If the quantity of remaining rows M after filtering is large, materialization may be considered. For the driven table, it is assumed that the driven table originally contains 10,000 data records. If 9,000 data records are filtered out based on the filtering condition corresponding to the driven table, 1,000 data records (i.e., valid data records) remain and only these 1,000 data records are effective when the driven table is scanned. Therefore, a materialization operation may be performed on the 1,000 data records. However, if only 1,000 data records are filtered out based on the filtering condition corresponding to the driven table and 9,000 data records remain, the materialization operation may not be performed because the overhead of directly accessing 10,000 data records in the driven table is approximately equivalent to the overhead of accessing 9,000 data records in the materialized table.

In a solution provided in the related art, an optimizer typically determines, through estimation, whether to perform a materialization operation on a driven table. If the materialization operation is determined to be required, a materialization operator is fixed in an execution plan for execution by an executor. However, due to estimation deviation, this manner often results in selection of an incorrect execution plan. For example, an execution plan that is expected to include a materialization operator may fail to include the materialization operator, thereby resulting in performance degradation. In view of this, in this embodiment of the present disclosure, performance is improved through adaptive materialization.

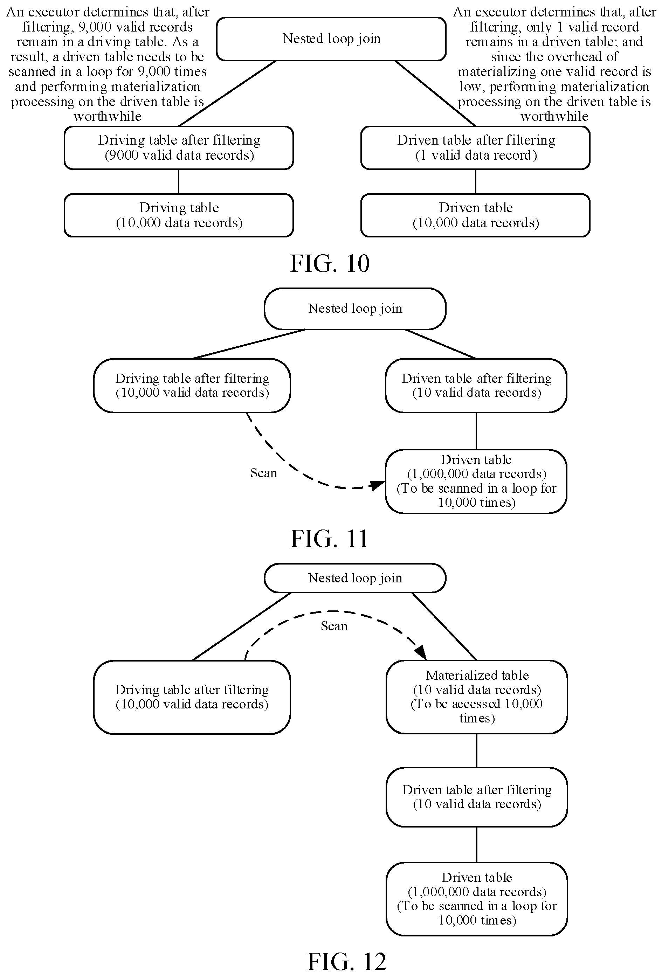

Adaptive materialization is implemented through cooperation between the optimizer and the executor. Under the premise that the optimizer determines an execution plan that does not have a fixed materialization operator, the executor may determine whether to perform adaptive materialization based on actual execution information of the execution plan. As an example, this embodiment of the present disclosure provides a schematic diagram, as shown in FIG. 9, of determining, by an optimizer, an execution plan that does not have a fixed materialization operator, and a schematic diagram, as shown in FIG. 10, of adaptive materialization of an executor.

Next, an adaptive materialization manner will be described in detail. As an example, this embodiment of the present disclosure provides a schematic diagram of a nested loop join, as shown in FIG. 11. For an execution plan that does not have a fixed materialization operator, the sub-plan in the execution plan may be repeatedly executed a plurality of times, and overhead of executing the sub-plan may be very high. As shown in FIG. 11, the filtered driving table includes 10,000 valid data records, and the driven table includes 1,000,000 data records. In this case, the sub-plan needs to be executed 10,000 times. During each execution of the sub-plan, a data scan of the driven table is required. To be specific, the driven table needs to be scanned repeatedly 10,000 times, to result in extremely high cost. However, the filtered driven table includes only 10 valid data records. If a materialization operation is performed on the 10 valid data records to obtain a materialized table, repeated execution of the sub-plan is no longer required. Instead, the materialized table may be directly accessed a plurality of times, to significantly reduce overhead, as shown in FIG. 12.

Adaptive materialization can be implemented through an adaptive materialization operator (also referred to as a virtual materialization operator). Compared with a conventional fixed materialization operator, the adaptive materialization operator is capable of determining, based on actual execution information, whether a materialization operation is required, and performing the materialization operation as required to obtain a materialized table. The adaptive materialization operator (virtual materialization operator) is an operator created by the optimizer and can determine, based on actual execution information, whether a materialization operation is required, and perform the materialization operation as required to obtain the materialized table. Compared with the conventional fixed materialization operator, the adaptive materialization operator can address the estimation deviation problem encountered by the optimizer.

The adaptive materialization operator is created by the optimizer, and the optimizer may determine whether to create the adaptive materialization operator through parameter-based control. Specific parameters may include parameters related to the execution pressure condition, such as a quantity threshold for valid data records in the driving table and a proportion threshold for valid data records in the driven table. After receiving a data query instruction, the optimizer first estimates the estimated execution information of the database in response to the instruction, including the quantity of valid data records in the driving table and the proportion of valid data records in the driven table. If the quantity of valid data records in the driving table obtained through estimation is greater than or equal to the preset quantity threshold, or if the proportion of valid data records in the driven table obtained through estimation is less than the preset proportion threshold, the execution pressure condition is considered to be satisfied. In this case, the optimizer creates the adaptive materialization operator. For example, the quantity threshold may be set based on the performance of the database and historical query data. First, an average value of the quantity of valid data records in the driving table across historical queries is calculated, where the average value is obtained by summing the quantity of valid data records in the driving table from the first query to an n^{th} query and dividing the sum by n. Next, a standard deviation is calculated, where the standard deviation is equal to the square root of the result obtained by dividing the sum of squared differences between each quantity of valid data records in the driving table from the first query to the n^{th} query and the average value by (n-1). The quantity threshold is then set as the average value plus twice the standard deviation. The proportion threshold may be set to 50% and definitely can be adjusted according to the practical application scenario.

For example, an execution pressure condition may be set and includes at least one of the following: (1) the quantity of valid data records in the driving table is greater than or equal to the quantity threshold; or (2) the proportion of valid data records in the driven table is less than the proportion threshold. The quantity threshold may be set based on the performance of the database and historical query data. For example, by calculating the average value and standard deviation of the quantity of valid data records in the driving table across historical queries, the quantity threshold can be set to the average value plus twice the standard deviation. For example, the quantity threshold that is obtained through calculation based on such statistical results may be 1,000. The proportion threshold may be set to 50% and definitely can be adjusted according to a practical application scenario. When the estimated execution information obtained by the optimizer upon receiving a data query instruction does not satisfy the execution pressure condition, the optimizer may conclude that a materialization operation on the driven table is not beneficial. However, because the optimizer inevitably has an estimation deviation problem, to avoid incorrect conclusions caused by the estimation deviation problem, the optimizer creates the adaptive materialization operator in the execution plan and delivers the execution plan to the executor for execution.

The executor receives the execution plan that includes the adaptive materialization operator and determines whether to perform adaptive materialization under the impact of the adaptive materialization operator. For example, the executor first executes a sub-plan in the execution plan on both the driving table and the driven table once and detects execution information during the sub-plan execution. The executor then determines whether the execution information satisfies the execution pressure condition. If the execution information satisfies the execution pressure condition, the executor performs a materialization operation on all valid data records in the driven table to obtain a materialized table and performs a data join between each remaining valid data record in the driving table and all valid data records in the materialized table. If the execution information does not satisfy the execution pressure condition, the executor continues to repeatedly execute the sub-plan.

In this embodiment of the present disclosure, the estimation deviation problem encountered by the optimizer can be addressed in a novel manner through adaptive materialization, and the performance of the nested loop join can be effectively improved. Particularly, rapid processing can be implemented even for a large data volume and a quick response can be made to the data query instruction to improve user experience.

The following continues to describe an exemplary structure in which an adaptive database materialization apparatus 255 provided in this embodiment of the present disclosure is implemented as a software module. In some embodiments, as shown in FIG. 2, the software module of the adaptive database materialization apparatus 255 stored in a memory 250 may include: a determination module 2551, configured to determine a data join execution plan for the database, the data join execution plan being configured to perform a data join between a driving table and a driven table in the database and including sub-plans executed sequentially for each data record in the driving table, and a sub-plan executed each time corresponding to one data record in the driving table; a first execution module 2552, configured to select one data record from the driving table, execute, for the selected data record, the sub-plan configured for a data join on the driven table once, and detect execution information in a process of executing the sub-plan; a materialization module 2553, configured to perform a materialization operation on the driven table based on the execution information, to obtain a materialized table; and a second execution module 2554, configured to stop executing the data join execution plan and perform a data join between the driving table and the materialized table.

In some embodiments, the materialization module 2553 is further configured to: perform, when the execution information satisfies an execution pressure condition, a materialization operation on the driven table to obtain a materialized table. The adaptive database materialization apparatus 255 further includes a third execution module, which is configured to: sequentially execute, starting from a next unprocessed data record in the driving table when the execution information does not satisfy the execution pressure condition, the sub-plan on the driving table and the driven table until all data records in the driving table are processed.

In some embodiments, the execution information includes at least one of the following: a quantity of data records in the driving table, or a proportion of valid data records in the driven table. The execution pressure condition includes at least one of the following: the quantity of data records in the driving table is greater than or equal to a quantity threshold, or the proportion of valid data records in the driven table is less than a proportion threshold.

In some embodiments, the determination module 2551 is further configured to: receive a data query instruction for the database; estimate estimated execution information of the database in response to the data query instruction; and determine a data join execution plan for the database based on the estimated execution information.

In some embodiments, the determination module 2551 is further configured to: determine, when the estimated execution information does not satisfy the execution pressure condition, an execution plan that applies a nested loop join and that does not have a fixed materialization operator as a data join execution plan for the database. The adaptive database materialization apparatus 255 further includes a non-target module, which is configured to: determine, when the estimated execution information satisfies the execution pressure condition, an execution plan that applies a nested loop join and that has a fixed materialization operator as an alternative execution plan for the database; alternatively, determine an execution plan that applies a hash join or merge-sort join as an alternative execution plan for the database.

In some embodiments, the determination module 2551 is further configured to: determine pre-stored statistical information of a plurality of data tables in the database that are related to the data query instruction; and perform estimation processing according to the data query instruction and the pre-stored statistical information of the plurality of data tables, to obtain estimated execution information of the database in response to the data query instruction.

In some embodiments, the data join execution plan includes a data filtering condition corresponding to the driven table. The first execution module 2552 is further configured to: perform filtering processing on a plurality of data records in the driven table based on the data filtering condition corresponding to the driven table, to obtain at least one valid data record in the driven table; and perform a data join between one data record in the driving table and all valid data records in the driven table. The materialization module 2553 is further configured to: perform a materialization operation on all valid data records in the driven table based on execution information, to obtain a materialized table.

In some embodiments, the data join execution plan includes a data filtering condition corresponding to the driving table. The first execution module 2552 is further configured to: perform filtering processing on a plurality of data records in the driving table based on the data filtering condition corresponding to the driving table, to obtain a plurality of valid data records in the driving table; and perform a data join between one valid data record in the driving table and at least a part of data records in the driven table. The second execution module 2554 is further configured to: perform a data join between each remaining valid data record in the driving table and all data records in the materialized table.

In some embodiments, the adaptive database materialization apparatus 255 further includes an update module, which is configured to: update the materialized table when an update condition is satisfied. The update condition includes at least one of the following: detecting an update in the driven table; or reaching an update cycle.

In some embodiments, the update module is further configured to: perform at least one of the following processing: perform a materialization operation on the driven table again to implement a full update of the materialized table; or perform a comparison processing on the driven table and the materialized table to obtain an update data record and perform an incremental update on the materialized table based on the update data record.

In some embodiments, the materialization module 2553 is further configured to: store data records from the driven table in an internal memory based on execution information, to obtain a materialized table in the internal memory; and store, when storage space of the internal memory is insufficient, data records in the driven table that have not been stored in the internal memory to a magnetic disk, to obtain a materialized table on the magnetic disk.

This embodiment of the present disclosure provides a computer program product or a computer program. The computer program product or the computer program includes executable instructions stored on a computer-readable storage medium. When a processor of an electronic device reads the executable instructions from the computer-readable storage medium, and executes the executable instructions, the electronic device is caused to perform the foregoing adaptive database materialization method in this embodiment of the present disclosure.

This embodiment of the present disclosure provides a computer-readable storage medium having executable instructions stored therein, the executable instructions, when executed by a processor, causing the processor to perform the foregoing adaptive database materialization method according to embodiments of the present disclosure.

In some embodiments, the computer-readable storage medium may be a memory such as a ferroelectric random access memory (FRAM), a read-only memory (ROM), a programmable read-only memory (PROM), an erasable programmable read-only memory (EPROM), an electrically erasable programmable read-only memory (EEPROM), a flash memory, a magnetic surface memory, an optical disk, or a CD-ROM; or may be any device including one of or any combination of the foregoing memories.

In some embodiments, the executable instructions can be written in a form of a program, software, a software module, a script, or code and according to a programming language (including a compiler or interpreter language or a declarative or procedural language) in any form, and may be deployed in any form, including an independent program or a module, a component, a subroutine, or another unit suitable for use in a computing environment.

For example, the executable instructions may, but do not necessarily, correspond to a file in a file system, and may be stored in a part of a file that stores another program or other data, for example, be stored in one or more scripts in a hypertext markup language (HTML) file, stored in a file that is specially configured for a program in discussion, or stored in a plurality of collaborative files (for example, files that store one or more modules, subprograms, or code portions).

For example, the executable instructions may be deployed to be executed on one electronic device, or on a plurality of electronic devices located at one location, or on a plurality of electronic devices that are distributed at a plurality of locations and interconnected through a communication network.

In summary, the present disclosure provides the adaptive database materialization method and apparatus, the electronic device, the computer-readable storage medium, and the computer program product. The electronic device first determines the data join execution plan for the database, the execution plan being configured to perform the data join between the driving table and the driven table in the database, and including the sub-plans sequentially executed for each data record in the driving table, and the sub-plan executed each time corresponding to one data record in the driving table. Next, one data record is selected from the driving table, and the sub-plan configured for a data join is executed, for the selected data record, on the driven table, and execution information is detected during the execution. The materialization operation is performed on the driven table based on the execution information to obtain the materialized table, and finally, execution the data join execution plan is stopped, and the data join is performed between the driving table and the materialized table. By executing the sub-plan once, the execution information can be obtained quickly and accurately with relatively low resource overhead. The execution information can precisely reflect whether the original execution plan suffers from performance degradation due to the absence of the fixed materialization operator. When performance degradation occurs, the materialization operation is performed and the data join is performed between the driving table and the materialized table. This is equivalent to dynamically adding a materialization operator into the original execution plan. This manner effectively compensates for performance degradation, significantly improves the efficiency of data join processing in the database, reduces query response time, and enhances resource utilization.

Further, when the materialization operation is performed on the driven table based on execution information to obtain the materialized table, the materialization operation is performed only when the execution information satisfies the execution pressure condition. This mechanism enables the materialization operation to be more targeted, and avoids resource waste caused by blind materialization. The materialization operation is triggered only when the execution information indicates that the original execution plan suffers from performance degradation and that the materialization operation can provide significant performance improvement. From a technical perspective, such a precise materialization decision can improve the effective utilization of system resources, reduce unnecessary computational and storage overhead, and improve the overall operational efficiency of a database system.

When the execution information does not satisfy the execution pressure condition, the sub-plan is sequentially executed, starting from the next unprocessed data record in the driving table, on the driving table and the driven table, until all data records in the driving table are processed. This processing manner avoids an unnecessary materialization operation when the materialization operation cannot provide performance improvement and ensures that the data join can be completed in an optimized manner under different execution statuses. From a technical perspective, it reduces additional system overhead, improves resource utilization, ensures that the execution plan is successfully completed, and avoids resource waste and performance degradation.

The execution pressure condition includes at least one of the following: the quantity of data records in the driving table is greater than or equal to the quantity threshold, or the proportion of valid data records in the driven table is less than the proportion threshold. Evaluating whether the data join execution plan suffers from performance degradation from both the driving table and the driven table perspectives enables a comprehensive and accurate determination of the necessity for the materialization operation. When the quantity of data records in the driving table is excessively large, a repeated execution count of the sub-plan increases, to significantly raise execution cost; and whereas when the proportion of valid data records in the driven table is too small, a large quantity of ineffective scan operations occur during the data join, to further increase execution cost. By setting the appropriate quantity threshold and proportion threshold, the materialization operation can be ensured to provide tangible performance improvement. Moreover, these thresholds can be flexibly adjusted according to practical application scenarios, thereby enhancing the adaptability and flexibility of the system.

The execution information includes at least one of the quantity of data records in the driving table or the proportion of valid data records in the driven table. The execution information can accurately reflect the execution cost of the data join execution plan. As the quantity of data records in the driving table increases, the repeated execution count of the sub-plan increases, to lead to higher execution cost for the data join execution plan; as the proportion of valid data records in the driven table decreases, a larger quantity of invalid data records need to be scanned during the data join, to increase execution cost. By detecting the key execution information, whether the materialization operation is necessary can be better determined, to provide an accurate basis for adaptive materialization and improve the intelligence of the system.

When the data join execution plan for the database is determined, the data query instruction for the database is first received; the estimated execution information of the database in response to the data query instruction is estimated; and finally, the data join execution plan for the database is determined based on the estimated execution information. The execution plan is determined according to the data query instruction and the estimated execution information, to enable prediction of an execution status of the database in response to the data query instruction and facilitate the selection of an appropriate data join execution plan. However, due to the impact of factors such as pre-stored statistical information and cost models during estimation, estimation deviations are inevitable. Subsequently, the estimation deviations can be effectively overcome through the adaptive materialization manner, to ensure performance optimization under various conditions, and enhance the stability and reliability of the system.

When the data join execution plan for the database is determined based on the estimated execution information, if the estimated execution information does not satisfy the execution pressure condition, the execution plan that applies the nested loop join and that does not have the fixed materialization operator is determined as the data join execution plan for the database. This manner is suitable for scenarios where the volume of data to be processed for the data join is relatively small. The manner that uses the nested loop join and that does not have the fixed materialization operator can reduce unnecessary overhead. Subsequently, performance is optimized through adaptive materialization to avoid fixing the materialization operator when unnecessary, thereby enhancing the flexibility and adaptability of the execution plan. In a scenario of a small data volume, the nested loop join can complete the data join at a relatively low cost, while adaptive materialization provides a remedial measure for potential performance degradation and ensures efficient operation of the system under varying data volumes.

When the estimated execution information satisfies the execution pressure condition, the execution plan that applies the nested loop join and that does not have the fixed materialization operator is determined as the alternative execution plan for the database. In a scenario of a large data volume, the computational complexity of the nested loop join is high, and performance may be significantly impacted. By fixing the materialization operator, the algorithmic performance of the nested loop join can be improved under the large data volume. The materialization operation can cache the data of the driven table and avoid scanning the driven table a plurality of times, thereby substantially reducing the execution cost of the data join, improving data join efficiency for the large data volume, and improving the overall system performance.

Alternatively, the execution plan that applies the hash join or the sort-merge join can be determined as the alternative execution plan for the database. The hash join and the sort-merge join exhibit superior performance when a large volume of data is processed. The hash join accelerates data matching by building a hash table, while the sort-merge join improves join efficiency by sorting the data. An appropriate execution plan is selected based on the estimated execution information, to fully leverage the advantages of different join algorithms, improve data join performance under different data volumes, allow the system to flexibly adjust execution strategies based on actual conditions, and enhance the adaptability and scalability of the system.

When the estimated execution information of the database in response to a data query instruction is estimated, pre-stored statistical information of the plurality of data tables related to the data query instruction are first determined. Estimation processing is performed according to the data query instruction and the pre-stored statistical information of the plurality of data tables, to obtain the estimated execution information of the database in response to the data query instruction. Estimation is performed according to both the data query instruction and the pre-stored statistical information, to enable a more accurate prediction of execution status. The pre-stored statistical information may include a total quantity of data records in each data table, high-frequency values, histograms, correlation coefficients, and the like and can reflect the characteristics and data distribution of the data tables. By analyzing and processing the information, the quantity of data records in the driving table and the proportion of valid data records in the driven table can be estimated more precisely, to provide a reliable basis for determining an appropriate execution plan and improve the accuracy of decision making of the system.

When the data join execution plan includes the data filtering condition corresponding to the driven table, one data record is first selected from the driving table. For the selected record, the sub-plan configured for the data join is executed on the driven table once. Filtering processing is first performed on the plurality of data records in the driven table based on the data filtering condition corresponding to the driven table, to obtain at least one valid data record in the driven table. Then, the data join is performed between one data record in the driving table and all valid data records in the driven table. Subsequently, the materialization operation is performed on all valid data records in the driven table based on the execution information, to obtain the materialized table. This manner can reduce a volume of data processed in subsequent operations and avoid processing invalid data records, thereby lowering the overhead of materialization operation and reducing the cost of subsequent scanning of the materialized table. From a technical perspective, it improves the targeting and efficiency of data processing, minimizes waste of system resources, and improves overall processing efficiency.

When the data join execution plan includes the data filtering condition corresponding to the driving table, one data record is first selected from the driving table; for the selected data record, the sub-plan configured for the data join is executed on the driven table once. Filtering processing is first performed on the plurality of data records in the driving table based on the data filtering condition corresponding to the driving table, to obtain the plurality of valid data record in the driving table. Then, the data join is performed between one valid data record in the driving table and at least a part of data records in the driven table. Finally, the data join is performed between each remaining valid data record in the driving table and all data records in the materialized table. By performing filtering processing on the driving table and performing the data join only on the valid data records, the accuracy and necessity of the data join are improved, while resource waste caused by performing the data join on the invalid data records is avoided. This improves the quality and efficiency of the data join, reduces unnecessary computational and storage overhead, and enables the system to process data more efficiently.

When the update condition is satisfied, the materialized table is updated. The update condition includes detecting the update in the driven table or reaching the update cycle. In a scenario where the data join execution plan needs to be executed a plurality of times, the driven table may be updated. If the initially obtained materialized table is continuously used for a data join may result in inaccurate data query results. By setting update conditions and timely updating the materialized table, the accuracy of the data records in the materialized table can be ensured, to guarantee the reliability of the data query results. This improves real-time performance of the system and data consistency, and enhances adaptability of the system in a dynamic data environment.

When the materialized table is updated, any one of the following processing may be performed: materializing the driven table again to implement the full update of the materialized table; and performing comparison processing on the driven table and the materialized table to obtain the update data record, and performing the incremental update on the materialized table based on the update data record. The full update ensures the integrity and accuracy of the data in the materialized table and is applicable for a scenario where the data in the driven table undergoes substantial changes. The incremental update, by comparing the driven table with the materialized table and updating only the data records that are changed, can improve update efficiency and reduce a computation amount. Selecting an appropriate update manner based on actual conditions helps improve data query efficiency, enables the system to efficiently update the materialized table under different data change scenarios, and ensures data timeliness and accuracy.

When the materialization operation is performed on the driven table based on the execution information to obtain the materialized table, the data records in the driven table are stored in the internal memory based on the execution information, to obtain the materialized table in the internal memory. When the storage space of the internal memory is insufficient, the data records in the driven table that have not been stored in the internal memory are stored on the magnetic disk, to obtain the materialized table on the magnetic disk. Because the internal memory provides significantly higher data access efficiency than the magnetic disk, preferentially storing the data records in the internal memory can effectively improve the efficiency of a subsequent data join. When the storage space of the internal memory is insufficient, using the magnetic disk for storage ensures that the materialization operation can be successfully completed and prevents operation failure caused by insufficient internal memory. This hybrid storage manner fully leverages the advantages of both the internal memory and the magnetic disk and improves storage efficiency and data processing capability of the system

The features described in connection with any one of the embodiments disclosed herein may be combined with features of any other embodiment, where such combination is technically compatible and consistent with the overall technical concept of the present invention. In particular, technical features from different embodiments that serve the same or similar technical purpose may be freely selected and combined with each other to form further embodiments.

The foregoing embodiments only describe several implementations of the present disclosure, which are described specifically and in detail, but cannot be construed as a limitation to the patent scope of the present disclosure. For a person of ordinary skill in the art, several transformations and improvements can be made without departing from the idea of the present disclosure. These transformations and improvements belong to the protection scope of the present disclosure. Therefore, the protection scope of the patent of the present disclosure shall be subject to the appended claims.

## Claims

1. A method of performing materialization in a database, executed by an electronic device, the method comprising:
determining an execution plan which includes a set of operations for joining a driving table with a driven table in a database, the execution plan comprising a plurality of sequentially executable sub-plans for a plurality of data records in the driving table, each of the sub-plans being for one data record of the plurality of the data records in the driving table;
collecting statistical information associated with the execution plan about data records in at least one of the driving table and the driven table during a process of executing a sub-plan to join a data record of the plurality of the data records in the driving table with the driven table;
materializing the driven table based on the statistical information to obtain a materialized table; and
stopping executing the execution plan, and joining the driving table with the materialized table.

2. The method according to claim 1, wherein materializing the driven table based on the statistical information to obtain a materialized table comprises:
materializing, in response to the statistical information satisfying the condition, the driven table to obtain a materialized table.

3. The method according to claim 2, further comprising:
in response to the statistical information not satisfying the condition, sequentially executing, starting from a next unprocessed data record in the driving table, the corresponding sub-plans to join the next unprocessed data record with the driven table until the plurality of data records in the driving table are processed.

4. The method according to claim 2 or 3, wherein the condition comprises at least one of: a quantity of data records in the driven table being greater than or equal to a quantity threshold, or a proportion of valid data records in the driven table being less than a proportion threshold.

5. The method according to any one of claims 1 to 4, wherein the statistical information comprises at least one of: a quantity of data records in the driving table, or a proportion of valid data records in the driven table.

6. The method according to any one of claims 1 to 4, wherein determining the execution plan comprises:
receiving a data query instruction for the database;
obtaining estimated statistical information by estimating statistical information associated with the data query instruction of the data base; and
determining whether to include a fixed materialized operator or an adaptive materialization operator in the execution plan for the database based on whether the estimated statistical information satisfies the condition.

7. The method according to claim 6, wherein determining the execution plan comprises:
determining, in response to the estimated statistical information not satisfying the condition, to include the adaptive materialization operator in the execution plan; .

8. The method according to claim 6 or 7, further comprises:
determining, in response to the estimated statistical information satisfying the condition, to include a fixed materialized operator in execution plan.

9. The method according to claim 6 or 7, further comprises:
determining an execution plan that uses a hash join or a merge-sort join as an alternative execution plan for the database.

10. The method according to any one of claims 6 to 9, wherein estimating the statistical information associated with the data query instruction of the database comprises:
determining pre-stored statistical information of a plurality of data tables related to the data query instruction in the database;
performing the estimating according to the data query instruction and the pre-stored statistical information of the plurality of data tables, to obtain the estimated statistical information associated with the data query instruction.

11. The method according to any one of claims 1 to 10, wherein the execution plan comprises a data filtering condition corresponding to the driven table; executing the sub-plan to join the data record of the plurality of the data records in the driving table with the driven table comprises:
filtering a plurality of data records in the driven table based on the data filtering condition corresponding to the driven table, to obtain at least one valid data record in the driven table; and
joining one data record in the driving table with the at least one valid data record in the driven table; and
materializing the driven table based on the statistical information to obtain a materialized table comprises:
materialing all of the valid data record in the driven table to obtain the materialized table.

12. The method according to any one of claims 1 to 10, wherein the execution plan comprises a data filtering condition corresponding to the driving table;
wherein executing the sub-plan to join the data record of the plurality of the data records in the driving table with the driven table comprises:
filtering a plurality of data records in the driving table based on the data filtering condition corresponding to the driving table, to obtain a plurality of valid data records in the driving table; and
joining one valid data record of the plurality of valid data records in the driving table with at least a part of data records in the driven table; and
wherein joining the driving table with the materialized table comprises:
joining each remaining valid data record in the driving table with a plurality of data records in the materialized table.

13. The method according to any one of claims 1 to 12, further comprising:
updating the materialized table in response to an update condition being satisfied,
the update condition comprising at least one of: detecting an update in the driven table, or reaching an update cycle.

14. The method according to claim 13, wherein updating the materialized table comprises at least one of:
materializing the driven table again to implement a full update of the materialized table; or
comparing the driven table with the materialized table to obtain an update data record, and performing an incremental update on the materialized table based on the update data record.

15. The method according to any one of claims 1 to 14, wherein materializing the driven table comprises:
storing data records in the driven table into an internal memory based on the statistical information, to generate a materialized table in the internal memory; and
storing, in response to storage space of the internal memory being insufficient, data records in the driven table that have not been stored in the internal memory onto a magnetic disk, to generate a materialized table on the magnetic disk.

16. An adaptive database materialization apparatus, comprising:
a determination module, configured to determine an execution plan which includes a set of operations for joining a driving table with a driven table in a database, the execution plan comprising a plurality of sequentially executable sub-plans for a plurality of data records in the driving table, each of the sub-plans being for one data record of the plurality of the data records in the driving table;
a first execution module, configured to collecting statistical information associated with the execution plan about data records in at least one of the driving table and the driven table during a process of executing a sub-plan to join a data record of the plurality of the data records in the driving table with the driven table;
a materialization module, configured to materialize the driven table based on the statistical information to obtain a materialized table; and
a second execution module, configured to stop executing the execution plan and join the driving table with the materialized table.

17. An electronic device, comprising:
a memory, configured to store executable instructions; and
a processor, configured to implement, when executing the executable instructions stored in the memory, the method according to any one of claims 1 to 15.

18. A computer-readable storage medium, having executable instructions stored therein, the executable instructions, when executed by a processor, implementing the method according to any one of claims 1 to 15.

19. A computer program product, comprising executable instructions, the executable instructions, when executed by a processor, implementing the method according to any one of claims 1 to 15.
